# EUROPÄISCHE PATENTSCHRIFT

(11) **EP 4 214 103 B1**
(45) Veröffentlichungstag und Bekanntmachung des Hinweises auf die Patenterteilung: **09.10.2024**
(21) Anmeldenummer: 21769901.6
(22) Anmeldetag: 24.08.2021
(51) Int. Cl.: B61L 23/04, B61L 25/02, B61K 9/08

(54) **VERFAHREN UND SYSTEM ZUR ERMITTLUNG EINES SOLL-GLEISVERLAUFS FÜR EINE LAGEKORREKTUR**
METHOD AND SYSTEM FOR DETERMINING A TARGET COURSE OF A TRACK FOR POSITION CORRECTION
PROCÉDÉ ET SYSTÈME POUR DÉTERMINER UN TRACÉ THÉORIQUE D'UNE VOIE EN VUE D'UNE CORRECTION DE POSITION

(30) Priorität: 16.09.2020 AT 507822020
(43) Veröffentlichungstag der Anmeldung: 26.07.2023
(73) Patentinhaber: Plasser & Theurer Export von Bahnbaumaschinen Gesellschaft m.b.H., 1010 Wien (AT)
(72) Erfinder: AUER, Florian, 1010 Wien (AT); BERGHUBER, Michael, 4020 Linz (AT); HINTERBERGER, Fabian, 4040 Linz (AT); METZGER, Bernhard, Chesapeake, Virginia 23324-0464 (US); WILCZEK, Krzysztof, 1200 Wien (AT)
(86) Internationale Anmeldenummer: PCT/EP2021/073315
(87) Internationale Veröffentlichungsnummer: WO 2022/058127

(56) Entgegenhaltungen:
- EP-A1- 3 358 079
- WO-A1-2016/061602
- WO-A1-2019/228742
- WO-A2-2017/215777
- AT-A1- 518 692

## Beschreibung

### Technisches Gebiet

Die Erfindung betrifft ein Verfahren zur Ermittlung einer Soll-Geometrie eines Gleises für eine Lagekorrektur des Gleises, wobei zunächst mittels eines Messsystems auf einem Gleisabschnitt eine Ist-Geometrie des Gleises erfasst wird und wobei anschließend mittels einer Recheneinheit eine Ausgleichsberechnung durchgeführt wird, um auf Basis der Ist-Geometrie die Soll-Geometrie zu berechnen. Zudem betrifft die Erfindung ein System zur Durchführung des Verfahrens.

### Stand der Technik

Bei einem Schottergleis wird durch Befahren und durch Witterungseinflüsse ein im Schotterbett gelagerter Gleisrost in seiner örtlichen Lage beeinflusst. Zur Überprüfung einer aktuellen Gleisgeometrie (Linienführung des Gleises) und insbesondere vor Instandsetzungsarbeiten erfolgen deshalb regelmäßig Messungen mittels eines eigens dafür vorgesehenen Messwagens. Auch eine entsprechend ausgestattete Gleisbaumaschine kann als Messwagen zum Einsatz kommen. In der Regel ist die Gleisgeometrie durch die horizontale Lage (Richtung) und die vertikale Lage (Gleisneigung) definiert. Für die Festlegung einer absoluten Gleisgeometrie ist zudem die Position gegenüber einem externen Referenzsystem erforderlich.

Bekannte Messmethoden nutzen neben dem Gleis befindliche externe Referenzpunkte, die an fixen Einrichtungen wie Elektromasten angebracht sind. Solche externen Referenzpunkte können als Vermarkungsbolzen oder sonstige Markierungsobjekte festgelegt sein. Ebenso können Landvermessungssysteme oder GNSS-Systeme zur Festlegung von externen Referenzpunkten dienen. Die vorgesehene Lage jedes externen Referenzpunktes zum Gleis ist in Verzeichnissen dokumentiert. Auf diese Weise ist auf Eisenbahn-Hauptstrecken die absolute Gleisgeometrie exakt definiert (=Designgeometrie des Gleises).

Zudem ist eine Soll-Geometrie des Gleises mittels interner Referenzen festlegbar. Dabei wird die Trassierung durch eine Abfolge von Trassierungselementen hinsichtlich ihrer Länge und Größe angegeben. Bei Geraden ist die Angabe einer Länge ausreichend. Übergangsbögen und Bögen werden jeweils durch die Angabe einer Länge und einer Bogengröße festgelegt. Sogenannte Gleishauptpunkte geben einen Wechsel zwischen unterschiedlichen Trassierungselementen an, insbesondere für Kreis- und Übergangsbögen sowie Neigungsbrüche.

Somit setzt sich die horizontale Lage des Gleises aus der Gleiskrümmung als Folge von geraden Abschnitten, Übergangsbögen und Kreisbögen zusammen. Die vertikale Lage des Gleises wird durch die Angabe der Neigung sowie Neigungswechsel samt deren Ausrundungsradien bestimmt. Der Überhöhungsverlauf des Gleises definiert sich durch deren Überhöhungsfolge inklusive Überhöhungsrampen. Bei der Festlegung der Gleisgeometrie werden Überhöhung und Richtung des Gleises entsprechend den Trassierungsrichtlinien (z.B. EN 13803) aufeinander abgestimmt.

Die Wiederherstellung einer gewünschten Gleislage mit hoher Qualität lässt sich mit dem sogenannten Präzisionsverfahren erreichen. Bei diesem Verfahren ist die exakte, absolute Gleisgeometrie (Designgeometrie) durch eine Abfolge definierter Trassierungselemente und durch die geothetische Position der Gleishauptpunkte bekannt. Vor einem Instandhaltungsvorgang werden die bestehende Gleisgeometrie und die Gleisposition relativ zu definierten Referenzpunkten (Festpunkten, Fixpunkten) gemessen. Das Messergebnis wird mit der Designgeometrie verglichen, wobei aus einer ermittelten Differenz Hebe- und Richtwerte für eine Gleislagekorrektur bestimmt werden. Dieses Verfahren ist sehr genau und eignet sich für Hochgeschwindigkeitsstrecken, die eine optimierte Instandhaltung erfordern. Dabei müssen die Geometrieparameter prozesssicher verarbeitet und die geothetischen Referenzpunkte regelmäßig nachgemessen werden.

Aus Kostengründen wird bei Strecken mit geringeren Anforderungen das sogenannte Ausgleichsverfahren angewandt. Dieses Verfahren ist ohne bekannte Designgeometrie des Gleises durchführbar. Genutzt wird beispielsweise ein Messsystem einer Gleisstopfmaschine, bei dem Messsehnen (Wandersehnen) zwischen auf dem Gleis geführten Messwägen gespannt sind und als Bezugssystem dienen. Verschiedene Ausprägungen dieses Wandersehnen-Messprinzips finden sich beispielsweise in der DE 10 2008 062 143 B3 oder in der DE 103 37 976 A1. Vorhandene Gleislagefehler werden dabei im Verhältnis der Spannweiten der Messsehnen zum Längsabstand der Messwägen verkleinert. Bei 4-Punktverfahren wird die bestehende relative Gleisgeometrie durch eine zusätzliche Messsehne erfasst. Eine entsprechende Maschine und ein Verfahren sind in der AT 520 795 A1 offenbart.

Bei einem Ausgleichsverfahren mit vorheriger Gleismessung wird die bestehende relative Ist-Geometrie des Gleises mit einer Vorabfahrt der Gleisstopfmaschine oder eines Messwagens gemessen. Zu diesem Zweck kommt bei modernen Gleismessfahrzeugen eine sogenannte inertiale Messeinheit (Inertial Measurement Unit, IMU) zum Einsatz. Ein Inertial-Messsystem ist in der Fachzeitschrift Eisenbahningenieur (52) 9/2001 auf den Seiten 6-9 beschrieben. Auch die DE 10 2008 062 143 B3 offenbart ein Inertial-Messprinzip zur Erfassung einer Gleislage. Basierend auf dieser Messung erfolgt eine Ausgleichsberechnung, bei der auf Basis der Ist-Geometrie eine zuvor unbekannte Soll-Geometrie berechnet wird. Ein ähnliches Verfahren wird im Dokument EP 3 358 079 A1 beschrieben.

In der Regel wird die Ist-Geometrie des Gleises in Form eines Pfeilhöhen- und Längshöhenverlaufs sowie einer Abfolge von Überhöhungswerten erfasst. Anhand dieser Aufzeichnung berechnet eine Reicheneinheit unter Berücksichtigung einer zuvor festgelegten Geschwindigkeitsklasse des Gleises sowie vorgegebener Obergrenzen für Verschiebe- und Hebewerte einen elektronischen Pfeilhöhenausgleich. Dabei werden die gemessenen Pfeilhöhen geglättet, um einen für die gegebenen Bedingungen möglichst idealen Verlauf zu erhalten. Die Lage der Übergangspunkte zwischen den Trassierungselementen (Gleishauptpunkte) ergibt sich im Zuge der Ausgleichsberechnung.

In einem nächsten Schritt werden aus den Pfeilhöhen durch Anwendung eines digitalen Filters die resultierenden Verschiebungen und Hebungen berechnet, um die das Gleis berichtigt werden muss, damit sich der berechnete Pfeilhöhenverlauf einstellen kann. Ergebnisse dieser weiteren Berechnungen sind somit Hebe- und Richtwerte (Korrekturwerte) für die Lagekorrektur des Gleises mittels der Gleisstopfmaschine.

Eine wiederholte Anwendung des Ausgleichsverfahrens hat den Nachteil, dass die Gleishauptpunkte von ihren ursprünglichen Positionen (gemäß einer ursprünglich festgelegten Designgeometrie) wegdriften. Somit führt die Alterung eines Gleises trotz Korrekturen mittels Ausgleichsverfahren zu einer zunehmenden Abweichung von der ursprünglichen Designgeometrie.

Kleinere Lageveränderungen der Gleishauptpunkte sind in der Regel unproblematisch. Oft lässt die Trassengestaltung einen ausreichenden Spielraum für die Festlegung der Gleislage. Schwierigkeiten ergeben sich jedoch bei sogenannten Zwangspunkten oder Zwangslagen wie zum Beispiel Brücken, Tunnel oder Bahnübergängen. Dort ist kein Spielraum für eine Verlagerung des Gleises gegeben. Deshalb ist es nach dem Stand der Technik üblich, die Verschiebewerte an diesen Stellen bei der Ausgleichsberechnung auf null zu setzen.

### Darstellung der Erfindung

Der Erfindung liegt die Aufgabe zugrunde, ein Verfahren der eingangs genannten Art in der Weise zu verbessern, dass eine höhere Qualität des vorgegebenen Soll-Gleisverlaufs als beim Ausgleichsverfahren erzielt wird. Weiter ist es eine Aufgabe der Erfindung, ein entsprechendes System anzugeben.

Erfindungsgemäß werden diese Aufgaben gelöst durch ein Verfahren gemäß Anspruch 1 und ein System gemäß Anspruch 10. Abhängige Ansprüche geben vorteilhafte Ausgestaltungen der Erfindung an.

Dabei ist vorgesehen, dass entlang des Gleisabschnitts mittels eines Positionserfassungssystems Ist-Positionspunkte des Gleises erfasst werden, dass zumindest ein Ist-Positionspunkt der Recheneinheit als Zwangspunkt vorgegeben wird und dass mittels der Recheneinheit die Ausgleichsberechnung in der Weise durchgeführt wird, dass die Soll-Geometrie der Ist-Geometrie als Abfolge geometrischer Trassierungselemente angeglichen und durch den vorgegebenen Zwangspunkt gelegt wird. Basis für die Berechnung ist die Ist-Geometrie (relative Trajektorie) des Gleises. Die Trassierungselemente werden auf das gemessene Ortsbild des Gleises gefiltert. Die gemessenen Ist-Positionspunkte (Gleispositionsspur) werden bei der Ausgleichsberechnung für die Hebe- und Richtwerte als zweite Basis berücksichtigt. Jeder Ist-Positionspunkt ist dabei durch Koordinaten in einem räumlichen Referenzsystem festgelegt. Beispielsweis wird ein ortsfestes Koordinatensystem mit dem Startpunkt einer Messfahrt als Ursprung gewählt. Selbstverständlich sind auch andere Koordinatensysteme zur Georeferenzierung nutzbar.

Im Unterschied zum Präzisionsverfahren wird somit kein Bezug zu fixen externen Referenzpunkten und somit zur Designgeometrie hergestellt. Es handelt sich nicht um eine absolute Vorabvermessung (Aufmessung) des Gleises. Gegenüber dem Präzisionsverfahren ist zwar eine geringere Genauigkeit zu erwarten, jedoch ist das erfindungsgemäße Verfahren mit einfacheren technischen Mitteln in effizienter und kostengünstiger Weise durchführbar.

Im Vergleich zum bekannten Ausgleichsverfahren mit Vormessung wird eine deutliche Qualitätssteigerung erzielt. Bei Zwangspunkten werden nicht bloß die Korrekturwerte auf null gesetzt. Erfindungsgemäß erfolgt eine Anpassung der gesamten berechneten Soll-Geometrie an zumindest einen vorgegebenen Zwangspunkt, indem eine optimierte Abfolge von definierten geometrischen Trassierungselementen durch den Zwangspunkt gelegt wird.

In einer Weiterbildung des Verfahrens ist vorgesehen, dass mittels einer Sensoreinrichtung eine in ihrer Lage fixierte Gleisstelle automatisiert erkannt wird und dass der einer erkannten fixierten Gleisstelle zugeordnete Ist-Positionspunkt mittels einer Vorgabeeinrichtung als Zwangspunkt vorgegeben wird. Die Sensoreinrichtung umfasst beispielsweise optische Sensoren mit Mustererkennung, um typische Strukturen eines Bahnübergangs oder einer Brücke zu erkennen. In Ihrer Lage bautechnisch fixierte Gleisstellen können auch mit optischen Markierungen sowie anderen passiven oder aktiven Markern gekennzeichnet sein, um eine einfache automatisierte Erkennung mittels Sensoren zu ermöglichen.

Alternativ dazu oder ergänzend wird in einer einfachen Variante ein Ist-Positionspunkt durch eine Bedienperson mittels einer Vorgabeeinrichtung als Zwangspunkt vorgegeben. Beispielsweise befindet sich die Bedienperson in einem Messfahrzeug zum Aufmessen des Gleisabschnitts. Sobald die Bedienperson das Überfahren einer Bogenweiche, einer Brücke ohne Schotterbettung oder eines Bahnübergangs mit starren Belägen erkennt, wird der aktuell erfasste Ist-Positionspunkt als Zwangspunkt vorgegeben. Auf Basis von Bildaufzeichnungen mit zugeordneten Koordinaten ist auch eine nachträgliche Vorgabe eines Zwangspunktes möglich.

Eine weitere Verbesserung sieht vor, dass die Ist-Positionspunkte mittels einer GNSS-Empfangseinrichtung als GNSS-Koordinaten erfasst werden. Die dabei zum Einsatz kommenden Systeme sind weitestgehend ausfallsicher und liefern Ergebnisse mit ausreichender Genauigkeit.

Dabei ist es sinnvoll, wenn die Erfassung der Ist-Positionspunkte mittels eines Differential-GNSS-Systems durchgeführt wird, um bei Bedarf die Genauigkeit der Positionsdaten zu erhöhen.

In einer vorteilhaften Ausprägung des Verfahrens wird die Ist-Geometrie des Gleises mittels einer inertialen Messeinheit erfasst, wobei insbesondere mittels der inertialen Messeinheit für jedes Messdatum ein Zeitstempel als gemeinsame Zeitbasis vorgegeben wird. Die inertiale Messeinheit ist sehr robust gegenüber äußeren Störeinflüssen und liefert für die vorliegende Anwendung sehr präzise Daten zur Erfassung der Ist-Geometrie. Für einen Abgleich mit den Daten des Positionserfassungssystems ist es sinnvoll, wenn die inertiale Messeinheit die Zeitbasis für eine Datensynchronisation liefert.

In einer Weiterbildung dieser Ausprägung wird in einer Auswerteeinrichtung aus Messdaten der inertialen Messeinheit eine dreidimensionale Trajektorie ermittelt, wobei aus einem Abgleich mit der Soll-Geometrie Korrekturwerte zur Lagekorrektur des Gleises ermittelt werden. Die dreidimensionale Trajektorie und die Soll-Geometrie beziehen sich dabei auf ein gemeinsames Koordinatensystem, wodurch die Korrekturwerte mit geringem Rechenaufwand bestimmbar sind. Die ermittelte dreidimensionale Trajektorie eignet sich auch zur anschaulichen Dokumentation des Gleiszustandes vor einer Gleiskorrektur.

Des Weiteren ist es sinnvoll, wenn dabei für eine linke Schiene des Gleises und für eine rechte Schiene des Gleises jeweils eine eigene dreidimensionale Trajektorie ermittelt wird. Damit sind insbesondere Überhöhungsfehler des Gleises oder Einzelfehler mit unterschiedlichen Absenkungen der jeweiligen Schiene auf einfache Weise erfassbar. Die Berechnung der Soll-Geometrie berücksichtigt dann diese Besonderheiten, indem beispielsweise Einzelfehler ausgeglichen werden.

In einer anderen vorteilhaften Ausprägung ist vorgesehen, dass von der inertialen Messeinheit ungefilterte Messdaten des erfassten Gleisabschnitts an eine Auswerteeinrichtung ausgegeben werden, dass mittels einer Simulationseinrichtung eine virtuelle inertiale Messung desselben Gleisabschnitts mit der Soll-Geometrie simuliert wird, um simulierte Messdaten unter Annahme der Soll-Geometrie zu erhalten, und dass Korrekturwerte zur Lagekorrektur des Gleises ermittelt werden, indem die simulierten Messdaten von den ungefilterten Messdaten der inertialen Messeinheit subtrahiert werden. Beim Einsatz einer inertialen Messeinheit kann es vorkommen, dass insbesondere in Kurvenfahrten in den ungefilterten Messdaten Artefakte auftreten. Diese Artefakte resultieren aus spezifischen Merkmalen des verwendeten inertialen Messverfahrens. Wenn nun auf die Soll-Geometrie dasselbe inertiale Messverfahren in virtueller Form angewandt wird, treten dieselben Artefakte auf. Durch die anschließende Subtraktion der ungefilterten Messdaten zur Ermittlung der Korrekturwerte heben sich die Artefakte gegenseitig auf. Damit sinkt insgesamt die notwendige Rechenleistung, weil die mitunter aufwendige digitale Filterung der Messdaten entfällt.

Bei einer weiteren Verbesserung des Verfahrens wird zumindest ein erfasster Ist-Positionspunkt, der nicht zwischen einem Anfangspunkt und einem Endpunkt eines für die Lagekorrektur vorgesehen Baustellenabschnitts liegt, als Zwangspunkt für die Ausgleichsberechnung festgelegt. Damit ist sichergestellt, dass die ermittelte Soll-Geometrie im aktuellen Baustellenabschnitt auch die Qualität von zukünftigen Gleiskorrekturen in angrenzenden Gleisabschnitten begünstigt. Es wird somit die Instandhaltung eines über den aktuellen Baustellenabschnitt hinausgehenden Gleisabschnitts mitberücksichtigt.

Erfindungsgemäß ist zur Durchführung eines der oben beschriebenen Verfahren ein System vorgesehen, mit einem Messfahrzeug zum Befahren eines Gleisabschnitts, umfassend ein Messsystem zum Erfassen einer Ist-Geometrie des Gleises, und mit einer Recheneinheit zur Berechnung einer Soll-Geometrie auf Basis der Ist-Geometrie, wobei das Messfahrzeug ein Positionserfassungssystem zum Erfassen von Ist-Positionspunkten entlang des Gleisabschnittes umfasst, wobei eine Vorgabeeinrichtung für die Recheneinheit eingerichtet ist zur Vorgabe von zumindest einem Ist-Positionspunkt als Zwangspunkt und wobei in der Recheneinheit ein Algorithmus eingerichtet ist, der die Soll-Geometrie der Ist-Geometrie als Abfolge geometrischer Trassierungselemente angleicht und durch den zumindest einen Zwangspunkt legt. Auf diese Weise wirken die Komponenten der Systems zusammen, um die Ist-Geometrie und Ist-Positionspunkte zu erfassen und daraus die Soll-Geometrie für die Gleislagekorrektur abzuleiten.

In einer Weiterbildung des Systems umfasst das Messfahrzeug eine Sensoreinrichtung zum automatisierten Erkennen einer in ihrer Lage fixierten Gleisstelle, wobei die Sensoreinrichtung mit der Vorgabeeinrichtung gekoppelt ist, um einen der Gleisstelle zugeordneten Ist-Positionspunkt als Zwangspunkt festzulegen. Die Sensoreinrichtung umfasst beispielsweise mehrere gekoppelte Sensoren unterschiedlicher Ausprägung, um physische Objekte des Gleises zu erfassten und zu kategorisieren. Ein entsprechendes Verfahren ist in der AT 518692 A1 derselben Anmelderin beschrieben. Sobald ein Objekt als bautechnisch fixierte Gleisstelle (Brücke, Bahnübergang etc.) kategorisiert wird, gibt die Vorgabeeinrichtung den entsprechenden Ist-Positionspunkt als Zwangspunkt vor. Alternativ dazu oder ergänzende können an solchen Gleisstellen Sensormarker angeordnet sein, auf die ein am Messfahrzeug angeordneter Sensor abgestimmt ist.

Eine einfachere Variante sieht vor, dass die Vorgabeeinrichtung eine Bedieneinheit umfasst, mittels derer ein Ist-Positionspunkt durch eine Bedienperson als Zwangspunkt festlegbar ist. Beispielsweise umfasst die Bedieneinheit ein Bedienelement, bei dessen Betätigung ein aktuell erfasster Ist-Positionspunkt als Zwangspunkt vorgegeben wird.

Vorteilhafterweise umfasst das Positionserfassungssystem eine GNSS-Empfangseinrichtung, die insbesondere mit Lagemesseinrichtungen zur Bestimmung der Lage der GNSS-Empfangseinrichtung gegenüber dem Gleis gekoppelt ist. Damit ist eine robuste und hinreichend genaue Bestimmung der Ist-Positionspunkte in einem geodätischen Referenzsystem durchführbar.

Des Weiteren ist es von Vorteil, wenn das Messsystem eine inertiale Messeinheit und insbesondere Lagemesseinrichtungen zur Bestimmung der Lage der inertialen Messeinheit gegenüber dem Gleis umfasst. Solche Messsysteme erfassen die Ist-Geometrie berührungslos, wodurch bei Messfahrten hohen Geschwindigkeiten erzielt werden können. Da auch eine GNSS-Empfangseinrichtung Ergebnisse in Echtzeit liefert, ist insgesamt eine hohe Arbeitsgeschwindigkeit des Gesamtsystems gegeben.

Weitergebildet wird das System durch eine Auswerteeinrichtung, die zur Berechnung von Korrekturwerten zur Lagekorrektur des Gleises eingerichtet ist, wobei eine Steuerungseinrichtung einer Gleisbaumaschine zur Verarbeitung der Korrekturwerte eingerichtet ist, um das Gleis mittels eines angesteuerten Hebe-/Richtaggregats in die vorgegebene Soll-Geometrie zu bringen. Auf diese Weise umfasst das System alle Komponenten, um eine Ist-Geometrie zu erfassen und auf dieser Basis eine Korrektur der Gleislage durchzuführen.

### Kurze Beschreibung der Zeichnungen

Die Erfindung wird nachfolgend in beispielhafter Weise unter Bezugnahme auf die beigefügten Figuren erläutert. Es zeigen in schematischer Darstellung:
- Fig. 1: Messfahrzeug auf einem Gleis
- Fig. 2: Ortsbild mit Baustellenabschnitt und Messabschnitt
- Fig. 3: Blockdiagramm zur Bestimmung von Korrekturwerten
- Fig. 4: Diagramme eines Gleisverlaufs
- Fig. 5: Diagramme eines Gleisbogens mit Übergangsbögen und Geraden
- Fig. 6: Ortsbild eines Gleisabschnitts mit Ist- und Soll-Geometrie

### Beschreibung der Ausführungsformen

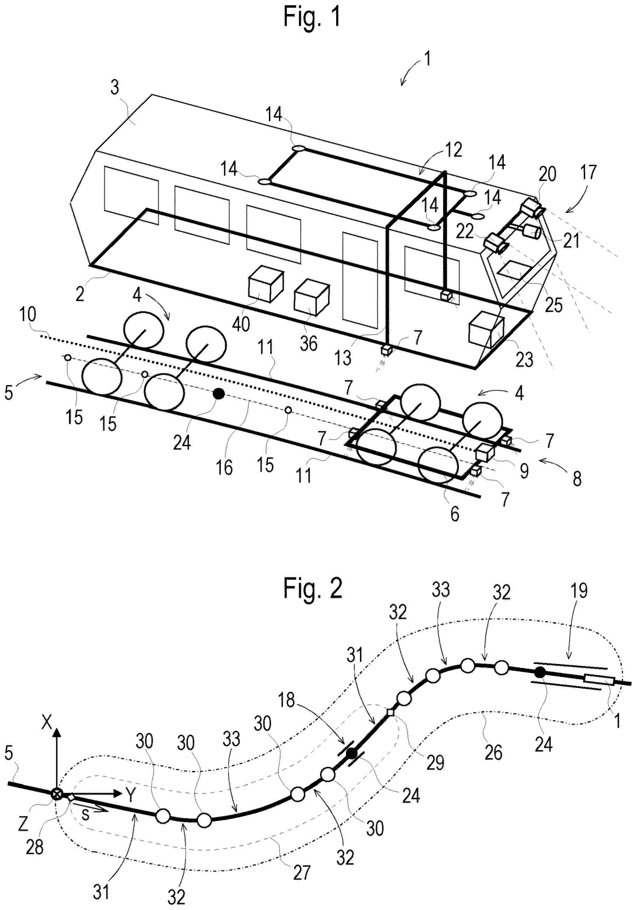

Fig. 1 zeigt ein Messfahrzeug 1 mit einem Fahrzeugrahmen 2, auf dem ein Wagenkasten 3 aufgebaut ist. Das Messfahrzeug 1 ist mittels Schienenfahrwerke 4 auf einem Gleis 5 verfahrbar. Zur besseren Veranschaulichung ist der Fahrzeugrahmen 2 samt Wagenkasten 3 von den Schienenfahrwerken 4 abgehoben dargestellt. Das Fahrzeug 1 kann auch als Gleisbaumaschine, insbesondere als Stopfmaschine ausgebildet sein. In diesem Fall ist nur eine Maschine zum Aufmessen und zur Korrektur des Gleises 5 erforderlich.

Die Schienenfahrwerke 4 sind vorzugsweise als Drehgestelle ausgebildet. Ein Messrahmen 6 ist mit den Radachsen des Drehgestells verbunden, sodass Bewegungen der Räder ohne Federwirkung auf den Messrahmen 6 übertragen werden. Gegenüber dem Gleis 5 ergeben sich somit lediglich Seitwärts- bzw. Pendelbewegungen des Messrahmens 6. Diese Bewegungen werden mittels am Messrahmen 6 angeordneter Lagemesseinrichtungen 7 erfasst. Diese sind beispielsweise als Laserlinienschnittsensoren ausgebildet.

Die Lagemesseinrichtungen 7 sind Komponenten eines am Messrahmen 6 aufgebauten Messsystems 8, das eine inertiale Messeinheit 9 umfasst. Mit der inertialen Messeinheit 9 werden während einer Messfahrt Messdaten einer Trajektorie 10 erfasst, wobei Relativbewegungen der inertialen Messeinheit 9 gegenüber dem Gleis 5 mittels der Daten der Lagemesseinrichtungen 7 kompensiert werden. Auf diese Weise erfolgt die Erfassung einer Ist-Geometrie I des Gleises 5. Mittels der Messdaten der Lagemesseinrichtungen 7 sind zudem die Messdaten der inertialen Messeinheit 9 auf eine jeweilige Schiene 11 des Gleises 5 transformierbar. Ergebnis ist eine Trajektorie 10 für jede Schiene 11.

Das Messfahrzeug 1 umfasst des Weiteren ein Positionserfassungssystem 12, mit dem eine aktuelle Position des Messfahrzeugs 1 erfassbar ist. Aufgrund der bekannten Lage des Messfahrzeugs 1 gegenüber dem Gleis 5 ist damit auch die Position der aktuell befahrenen Gleisstelle erfassbar. Beispielsweise umfasst das Positionserfassungssystem 12 eine GNSS-Empfangseinrichtung, die über einen Träger 13 starr mit dem Fahrzeugrahmen 2 verbunden ist. Diese GNSS-Empfangseinrichtung umfasst mehrere zueinander eingerichtete GNSS-Antennen 14 für eine genaue Erfassung von GNSS-Positionen des Messfahrzeugs 1. Um Pendelbewegungen des Fahrzeugrahmens 2 gegenüber dem Gleis 5 zu erfassen, sind am Fahrzeugrahmen 2 weitere Lagemesseinrichtungen 7 angeordnet. Auch hier kommen beispielsweise Laserlinienschnittsensoren zum Einsatz. Für eine einfache Ausführung der Erfindung ist eine GNSS-Antenne 14 ausreichend. Auf diese Weise werden laufend Ist-Positionspunkte 15 des Gleises 5 bzw. einer Gleichsachse 16 erfasst.

Eine nicht dargestellte alternative Positionserfassungseinrichtung 12 umfasst ein funkbasiertes Messsystem zur Echtzeit-Lokalisierung. Dabei sind am Messfahrzeug 1 mehrere Sendermodule angebracht. Neben der Gleisstrecke befindliche Referenzstationen umfassen Transponder. Durch eine laufende Distanzmessung zwischen den Sendermodulen und den Transpondern ist die Lage des Messfahrzeugs 1 und somit die Lage der aktuell befahrenen Gleisstelle gegenüber den Referenzstationen ermittelbar. Die Referenzstationen dienen lediglich zur Positionsbestimmung ohne Bezug zur ursprünglichen Designgeometrie des Gleises 5.

Zudem umfasst das Messfahrzeug 1 eine Sensoreinrichtung 17 zum automatischen Erkennen einer baulich in ihrer Lage fixierten Gleisstelle 18, 19 (Fig. 2). Vorteilhafterweise umfasst die Sensoreinrichtungen 17 mehrere Sensoren 20, 21, 22 deren Daten gemeinsam ausgewertet werden. Zum Einsatz kommen zum Beispiel eine Videokamera 20, ein Rotationslaserscanner 21 und eine Infrarotkamera mit Infrarotbeleuchtung 22. Gekoppelt ist die Sensoreinrichtung 17 mit einer Vorgabeeinrichtung 23, um einen einer fixen Gleisstelle 18, 19 zugeordneten Ist-Positionspunkt 15 als Zwangspunkt 24 festzulegen. Als Alternative zur Sensoreinrichtung 17 oder zusätzlich kann die Vorgabeeinrichtung 23 eine Bedieneinheit 25 umfassen. Mittels dieser Bedieneinheit 25 ist ein Ist-Positionspunkt 15 durch eine Bedienperson als Zwangspunkt 24 vorgebbar.

In Fig. 2 ist ein Gleis 5 dargestellt, das mit dem Messfahrzeug 1 befahren wird. Eine strichpunktierte Umrandung kennzeichnet die Länge eines Gleisabschnitts 26, auf dem die Ist-Geometrie I und die Ist-Positionspunkte 15 des Gleises 5 erfasst werden. Eine gepunktete Umrandung kennzeichnet die Länge eines Baustellenabschnitts 27, auf dem später das Gleis 5 korrigiert wird. Der Baustellenabschnitt 27 ist kürzer als der gemessene Gleisabschnitt 26 und wird durch einen Anfangspunkt 28 und einen Endpunkt 29 begrenzt.

Auf dem dargestellten Gleisabschnitt 26 befinden sich zwei Gleisstellen 18, 19, die baulich in ihrer Lage fixiert sind. Dabei handelt es sich beispielsweise um einen Bahnübergang 18 mit starren Belägen und um eine Brücke 19 ohne Schotterbettung. Die Brücke 19 liegt außerhalb des Baustellenabschnitts 27. Während einer Messfahrt werden Ist-Positionspunkte 15, die diesen Gleisstellen 18, 19 zugeordnet sind, als Zwangspunkte 24 festgelegt.

Im gezeigten Beispiel dient zur Georeferenzierung der Messergebnisse ein ortfestes Koordinatensystem XYZ, das seinen Ursprung am Startpunkt der Messfahrt hat. Die X-Achse zeigt in Richtung Norden, die Y-Achse Richtung Osten und die Z-Achse nach unten. Während der Messfahrt wird zudem ein Weg s erfasst, der neben einem Zeitstempel zur Synchronisation von Messergebnissen der unterschiedlichen Systeme 8, 12, 17 dienen kann.

Entlang des Gleisabschnitts 26 befinden sich Gleishauptpunkte 30. Diese Gleishauptpunkte 30 markieren jeweils eine Grenze zwischen einer Gerade 31 und einem Übergangsbogen 32 sowie zwischen einem Übergangsbogen 32 und einem Kreisbogen 33. Eine Gerade 31, ein Übergangsbogen 32 und ein Kreisbogen 33 (Vollbogen) sind dabei als geometrischen Trassierungselemente definiert.

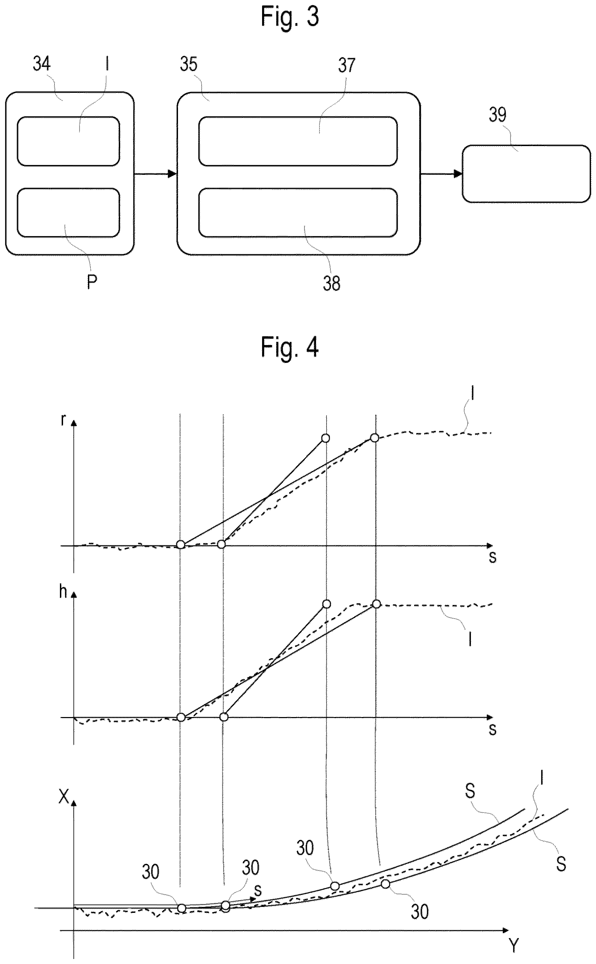

Das Blockdiagramm in Fig. 3 veranschaulicht die einzelnen Verfahrensschritte. Zunächst wird eine Vormessung 34 durchgeführt, mit der die relative Ist-Geometrie I und die GNSS-Position P des Gleises 5 erfasst werden. Als Ergebnisse liegen die Messdaten der inertialen Messeinheit 9 und Koordinatendaten für die erfassten Ist-Positionspunkte 15 vor.

Anschließend erfolgt eine Ausgleichsberechnung 35 mittels eines Optimierungsalgorithmus, der in einer Recheneinheit 36 eingerichtet ist. Konkret erfolgt eine Gleislagenoptimierung 37, indem auf Basis der Ist-Geometrie I eine Gleisgeometrie durch aneinandergereihte geometrische Trassierungselemente 31, 32, 33 gebildet wird, um Gleislagefehler zu entfernen. Dieser Optimierungsvorgang 37 geschieht in Abhängigkeit einer Gleispositionsoptimierung 38, indem die Trassierungselemente 31, 32, 33 in der Weise aneinandergereiht und dimensioniert werden, dass die sich ergebene Soll-Geometrie S des Gleises 5 durch vorgegebene Zwangspunkte 24 gelegt wird.

Randbedingungen für diese Optimierungsvorgänge 37, 38 bilden die Anschlussstellen an den Grenzen des Baustellenabschnitts 27. Konkret muss die Soll-Geometrie S durch den Anfangspunkt 28 und durch den Endpunkt 29 der Baustelle gelegt werden. Des Weiteren muss die Soll-Geometrie S in diesen Punkten 28, 29 tangential zum unbearbeiteten Gleis 5 verlaufen. Es kommt beispielsweise ein Optimierungsalgorithmus zum Einsatz, der als Zielfunktion die Abweichungen zwischen Soll-Geometrie S und Ist-Geometrie I unter den gegebenen Nebenbedingungen optimiert (Methode der kleinsten Quadrate).

Mit der auf diese Weise vorgegebenen Soll-Geometrie S erfolgt im nächsten Schritt eine Korrekturwertberechnung 39. Das geschieht in einer ersten Variante mittels der dreidimensionalen Trajektorie 10, die aus den Messdaten der inertialen Messeinheit 9 abgleitet wird. Aus den Koordinaten der Trajektorie 10 geht die Ist-Geometrie I des Gleises 5 unmittelbar hervor, sodass aus einem Abgleich mit der Soll-Geometrie S direkt die Korrekturwerte ermittelt werden können. In der Regel sind das Verschiebewerte (Richtwerte) und Hebewerte zum seitlichen Richten und zum Heben des Gleisrostes. Vorzugsweise werden für jede Schiene 11 eigene Hebewerte vorgegeben, um beispielsweise Einzelfehler auszugleichen oder Überhöhungen anzupassen. Die Bestimmung der Korrekturwerte erfolgt mittels einer Auswerteeinrichtung 40, der die Werte der Ist-Geometrie I und der Soll-Geometrie S des Gleises 5 zugeführt werden.

In einer zweiten Variante werden die ungefilterten Messdaten der inertialen Messeinheit 9 genutzt. Somit entfällt die Notwendigkeit, für die Korrekturdatenberechnung 39 die Koordinaten der Trajektorie 10 zu ermitteln. Stattdessen erfolgt in einer Auswerteeinrichtung 38 ein Simulationsvorgang, bei dem eine inertiale Messung simuliert wird. Ausgehend von der realen Messung des Gleisabschnitts 26 mittels der realen inertialen Messeinheit 9 erfolgt eine virtuelle Messung desselben Gleisabschnitts 26 mit der errechneten Soll-Geometrie S. Dabei kommt eine virtuelle inertiale Messeinheit zum Einsatz. Die reale und die virtuelle Messeinheit nutzen dasselbe inertiale Messverfahren. Verfahrensbedingte Artefakte treten sowohl bei der realen als auch bei der virtuellen Messung auf. Durch Subtraktion der erhaltenen Messdaten der Ist-Geometrie I und der Soll-Geometrie S heben sich diese Artefakte auf. Als Resultat ergeben sich die Korrekturwerte für den entsprechenden Gleisabschnitt 26.

Die Korrekturwerte werden einer Steuerungseinrichtung eines Hebe-/Richtaggregats einer Stopfmaschine vorgegeben. Diese kann gleichzeitig als das hier beschriebene Messfahrzeug 1 ausgebildet sein. Zum Korrigierten der Gleisgeometrie wird das Gleis 5 nach dem Vormessen mittels der Stopfmaschine befahren. Entsprechend den vorgegebenen Korrekturwerten wird der Gleisrost mittels des Hebe-/Richtaggregats in seine gewünschte Lage gebracht und dort mittels eines Stopfaggregats fixiert. Zur Überprüfung der Gleislage dient ein Sehnenmesssystem, das auf der Stopfmaschine aufgebaut ist. Vorteilhafterweise umfasst ein sogenannter Gleisgeometrie-Leitcomputer (auch Automatischer Leitcomputer ALC genannt) in der Stopfmaschine die Recheneinheit 36 und die Auswerteeinrichtung 40. Der Leitcomputer dient dabei als zentrale Einheit zur Bestimmung der Korrekturwerte und zur Steuerung der Stopfmaschine.

Fig. 4 zeigt in den oberen beiden Diagrammen ein Krümmungsdiagramm (Krümmungsbild) und ein Überhöhungsdiagramm (Überhöhungsbild). Auf der Abszisse ist jeweils der Weg s aufgetragen. Die Ordinate des Krümmungsdiagramms zeigt die aktuelle Krümmung bzw. Richtung r über dem Weg s an. Die Ordinate des Überhöhungsdiagramms zeigt die Überhöhung bzw. Höhe h über dem Weg s an.

Darunter ist das zugehörige Ortsbild des Gleisabschnitts 26 in einem ortsfesten Koordinatensystem XYZ mit den X-Koordinaten und Y-Koordinaten dargestellt. Der dargestellte Gleisabschnitt beginnt mit einer Geraden 31 und geht dann in einen Übergangsbogen 32 mit steigender Krümmung über, bis die Krümmung im anschließenden Kreisbogen 33 (Vollbogen) konstant bleibt.

In den Diagrammen und im Ortsbild ist die gemessene Ist-Geometrie I mit gestrichelten Linien dargestellt. Es ist klar ersichtlich, dass sich keine eindeutige Lage der Gleishauptpunkte 30 für die zu bestimmende Soll-Geometrie S ergibt. Eingezeichnet sind zwei Varianten, die zu unterschiedlich langen Übergangsbögen 32 und somit zu unterschiedlichen Soll-Geometrien S führen. Diesen Spielraum nutzt das erfindungsgemäße Verfahren aus, um eine optimierte Abfolge der geometrischen Trassierungselemente zu erreichen.

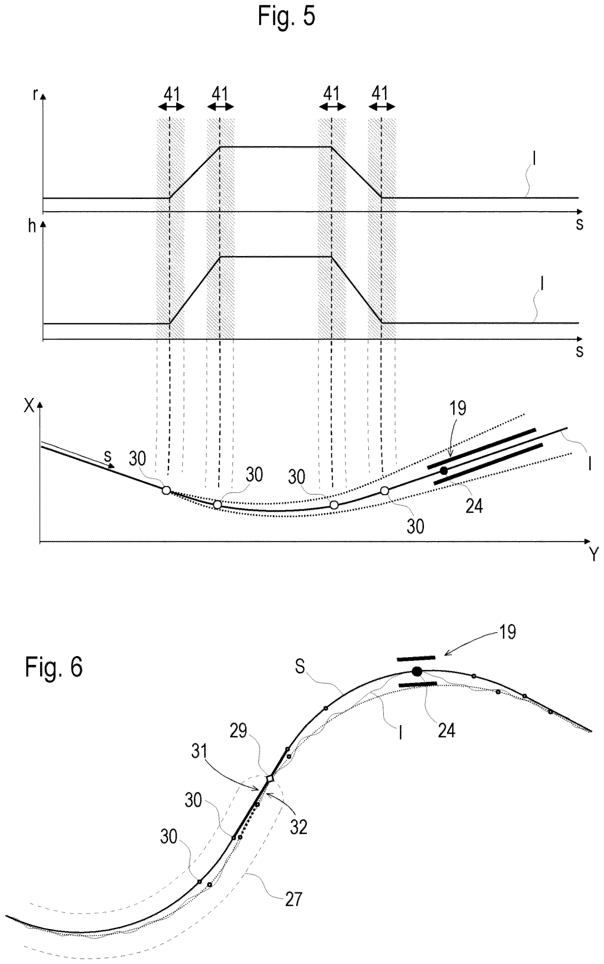

Auch in Fig. 5 sind ein Krümmungsdiagramm, ein Überhöhungsdiagramm und ein Ortsbild dargestellt. Die jeweils durchgezogene Linie zeigt die Soll-Geometrie S, die mit dem erfindungsgemäßen Verfahren ermittelt wurde. Dabei ist ein Ist-Positionspunkt 15, der einer fixen Gleisstelle 19 (z.B. Brücke) zugeordnet ist, als Zwangspunkt 24 vorgegeben. Auf Basis der ermittelten Ist-Geometrie I und des vorgegebenen Zwangspunktes 24 wird die Soll-Geometrie S in der Weise als Abfolge geometrischer Trassierungselemente der Ist-Geometrie I angeglichen, dass der Zwangspunkt 24 auf der Linie der Soll-Geometrie S liegt. Dabei ergibt sich die richtige Lage für die eingezeichneten Gleishauptpunkte 30. Im Ortsbild sind mit gepunkteten Linien zwei Beispiele eingezeichnet, die eine mögliche Soll-Geometrie nach dem herkömmlichen Ausgleichsverfahren zeigen. Die Gleishauptpunkte 30 weichen dabei innerhalb eines schraffiert dargestellten Fehlerbereichs 41 von der richtigen Lage ab. Dabei können bereits kleine Fehler große Auswirkungen auf das resultierende Ortsbild haben.

Anhand von Fig. 6 wird erläutert, dass auch ein außerhalb der Baustelle vorgegebener Zwangspunkt 24 die Soll-Geometrie S im Baustellenabschnitt 27 positiv beeinflusst. Dargestellt ist ein Ortsbild eines Gleisabschnitts 26, auf dem eine Vormessung mittels des Messfahrzeugs 1 durchgeführt wurde. Die erfasst Ist-Geometrie I ist mit einer dünnen durchgezogenen Linie dargestellt. Eine gepunktete Linie zeigt eine mögliche Soll-Geometrie nach dem herkömmlichen Ausgleichsverfahren. Dabei wird die Ist-Geometrie I lediglich geglättet. Es ist klar ersichtlich, dass der eingezeichnete Zwangspunkt 24 an einer fixierten Gleisstelle 18 (z.B. Bahnübergang) verfehlt wird.

Beim erfindungsgemäßen Verfahren werden die Koordinaten des Zwangspunks 24 in die Berechnung der Soll-Geometrie S mit einbezogen. Auf diese Weise ergibt sich die mit durchgezogener Linie eingezeichnete Abfolge von geometrischen Trassierungselementen. Gleishauptpunkte 30 geben wieder die Grenzen der Trassierungselemente an. Im gezeigten Beispiel würde das nach dem herkömmlichen Ausgleichsverfahren korrigierte Gleis 5 mit einem Übergangsbogen 32 an das unbearbeitete Gleis anschließen.

Beim erfindungsgemäßen Verfahren verläuft das Gleis 5 aufgrund des einbezogenen Zwangspunktes 24 an dieser Stelle als längere Gerade 31. Anschlusswinkel und Positionskoordinaten des Gleises 5 im Endpunkt 29 der Baustelle bleiben dieselben. Damit ist sichergestellt, dass bei einer späteren Korrektur des weiteren Gleisverlaufs ein optimales Ergebnis erzielt wird. In Fig. 6 sind die Verläufe des Gleises 5 stark übertrieben dargestellt, um den beschriebenen Effekt zu verdeutlichen.

## Patentansprüche

1. Verfahren zur Ermittlung einer Soll-Geometrie (S) eines Gleises (5) für eine Lagekorrektur des Gleises (5), wobei zunächst mittels eines Messsystems (8) auf einem Gleisabschnitt (26) eine Ist-Geometrie (I) des Gleises (5) erfasst wird und wobei anschließend mittels einer Recheneinheit (36) eine Berechnung der Soll-Geometrie (S) auf Basis der Ist-Geometrie (I) durchgeführt wird, **dadurch gekennzeichnet, dass** entlang des Gleisabschnitts (26) mittels eines Positionserfassungssystems (13) Ist-Positionspunkte (15) des Gleises (5) erfasst werden, dass zumindest ein Ist-Positionspunkt (15) der Recheneinheit (36) als Zwangspunkt (24) vorgegeben wird und dass mittels der Recheneinheit (36) die Soll-Geometrie (S) in der Weise berechnet wird, dass die Soll-Geometrie (S) der Ist-Geometrie (I) als Abfolge geometrischer Trassierungselemente (31, 32, 33) angeglichen und durch den vorgegebenen Zwangspunkt (24) gelegt wird.

2. Verfahren nach Anspruch 1, **dadurch gekennzeichnet, dass** mittels einer Sensoreinrichtung (17) eine in ihrer Lage fixierte Gleisstelle (18, 19) automatisiert erkannt wird und dass der einer erkannten fixierten Gleisstelle (18, 19) zugeordnete Ist-Positionspunkt (15) mittels einer Vorgabeeinrichtung (23) als Zwangspunkt (24) vorgegeben wird.

3. Verfahren nach Anspruch 1 oder 2, **dadurch gekennzeichnet, dass** ein Ist-Positionspunkt (15) durch eine Bedienperson mittels einer Vorgabeeinrichtung (23) als Zwangspunkt (24) vorgegeben wird.

4. Verfahren nach einem der Ansprüche 1 bis 3, **dadurch gekennzeichnet, dass** die Ist-Positionspunkte (15) mittels einer GNSS-Empfangseinrichtung als GNSS-Koordinaten erfasst werden.

5. Verfahren nach Anspruch 4, **dadurch gekennzeichnet, dass** die Erfassung der Ist-Positionspunkte (15) mittels eines Differential-GNSS-Systems durchgeführt wird.

6. Verfahren nach einem der Ansprüche 1 bis 5, **dadurch gekennzeichnet, dass** die Ist-Geometrie (I) des Gleises (5) mittels einer inertialen Messeinheit (9) erfasst wird und dass insbesondere mittels der inertialen Messeinheit (9) für jedes Messdatum ein Zeitstempel als gemeinsame Zeitbasis vorgegeben wird.

7. Verfahren nach Anspruch 6, **dadurch gekennzeichnet, dass** in einer Auswerteeinrichtung (40) aus Messdaten der inertialen Messeinheit (9) eine dreidimensionale Trajektorie (10) ermittelt wird und dass aus einem Abgleich mit der Soll-Geometrie (S) Korrekturwerte zur Lagekorrektur des Gleises (5) ermittelt werden.

8. Verfahren nach Anspruch 6, **dadurch gekennzeichnet, dass** von der inertialen Messeinheit (9) ungefilterte Messdaten des erfassten Gleisabschnitts (26) an eine Auswerteeinrichtung (40) ausgegeben werden, dass mittels einer Simulationseinrichtung eine virtuelle inertiale Messung desselben Gleisabschnitts (26) mit der Soll-Geometrie (S) simuliert wird, um simulierte Messdaten unter Annahme der Soll-Geometrie (S) zu erhalten, und dass Korrekturwerte zur Lagekorrektur des Gleises (5) ermittelt werden, indem die simulierten Messdaten von den ungefilterten Messdaten der inertialen Messeinheit (9) subtrahiert werden.

9. Verfahren nach einem der Ansprüche 1 bis 8, **dadurch gekennzeichnet, dass** zumindest ein erfasster Ist-Positionspunkt (15), der nicht zwischen einem Anfangspunkt (28) und einem Endpunkt (29) eines für die Lagekorrektur vorgesehen Baustellenabschnitts (27) liegt, als Zwangspunkt (24) für die Ausgleichsberechnung (35) festgelegt wird.

10. System zur Durchführung eines Verfahrens nach einem der Ansprüche 1 bis 9, mit einem Messfahrzeug (1) zum Befahren eines Gleisabschnitts (26), umfassend ein Messsystem (8) zum Erfassen einer Ist-Geometrie (I) des Gleises (5), und mit einer Recheneinheit (36) zur Berechnung einer Soll-Geometrie (S) auf Basis der Ist-Geometrie (I), **dadurch gekennzeichnet, dass** das Messfahrzeug (1) ein Positionserfassungssystem (12) zum Erfassen von Ist-Positionspunkten (15) entlang des Gleisabschnittes (26) umfasst, dass eine Vorgabeeinrichtung (23) für die Recheneinheit (36) eingerichtet ist zur Vorgabe von zumindest einem Ist-Positionspunkt (15) als Zwangspunkt (24) und dass in der Recheneinheit (36) ein Algorithmus eingerichtet ist, der die Soll-Geometrie (S) der Ist-Geometrie (I) als Abfolge geometrischer Trassierungselemente (31, 32, 33) angleicht und durch den zumindest einen Zwangspunkt (24) legt.

11. System nach Anspruch 10, **dadurch gekennzeichnet, dass** das Messfahrzeug (1) eine Sensoreinrichtung (17) zum automatisierten Erkennen einer in ihrer Lage fixierten Gleisstelle (18, 19) umfasst und dass die Sensoreinrichtung (17) mit der Vorgabeeinrichtung (23) gekoppelt ist, um einen der Gleisstelle (18, 19) zugeordneten Ist-Positionspunkt (15) als Zwangspunkt (24) festzulegen.

12. System nach Anspruch 10 oder 11, **dadurch gekennzeichnet, dass** die Vorgabeeinrichtung (23) eine Bedieneinheit (25) umfasst, mittels derer ein Ist-Positionspunkt (15) durch eine Bedienperson als Zwangspunkt (24) festlegbar ist.

13. System nach einem der Ansprüche 10 bis 12, **dadurch gekennzeichnet, dass** das Positionserfassungssystem (12) eine GNSS-Empfangseinrichtung umfasst, die insbesondere mit Lagemesseinrichtungen (7) zur Bestimmung der Lage der GNSS-Empfangseinrichtung gegenüber dem Gleis (5) gekoppelt ist.

14. System nach einem der Ansprüche 10 bis 13, **dadurch gekennzeichnet, dass** das Messsystem (8) eine inertiale Messeinheit (9) und insbesondere Lagemesseinrichtungen (7) zur Bestimmung der Lage der inertialen Messeinheit (9) gegenüber dem Gleis (5) umfasst.

15. System nach einem der Ansprüche 10 bis 14, **dadurch gekennzeichnet, dass** eine Auswerteeinrichtung (40) zur Berechnung von Korrekturwerten zur Lagekorrektur des Gleises (5) eingerichtet ist und dass eine Steuerungseinrichtung einer Gleisbaumaschine zur Verarbeitung der Korrekturwerte eingerichtet ist, um das Gleis mittels eines angesteuerten Hebe-/Richtaggregats in die vorgegebene Soll-Geometrie zu bringen.

## Claims

1. A method for determining a target geometry (S) of a track (5) to correct the geometry of the track (5), with an actual geometry (I) of the track (5) being detected first on a track section (26) by means of a measuring system (8) and with a calculation of the target geometry (S) on the basis of the actual geometry (I) being carried out afterwards by means of a computing unit (36), **characterised in that** actual position points (15) of the track (5) are detected along the track section (26) by means of a position detection system (13), and that at least one actual position point (15) is given to the computing unit (36) as a point of restraint (24), and that the target geometry (S) is calculated by means of the computing unit (36) in such a way that the target geometry (S) is adapted to the actual geometry (I) as a sequence of geometric track alignment design elements (31, 32, 33) and is placed through the preset point of restraint (24).

2. A method according to claim 1, **characterised in that** a track point (18, 19) fixed in its position is automatically detected by means of a sensor device (17) and that the actual position point (15) associated with a detected fixed track point (18, 19) is preset as a point of restraint (24) by means of a presetting device (23).

3. A method according to claim 1 or 2, **characterised in that** an actual position point (15) is preset as a point of restraint (24) by an operator by means of a presetting device (23).

4. A method according to one of the claims 1 to 3, **characterised in that** the actual position points (15) are detected as GNSS coordinates by means of a GNSS receiving device.

5. A method according to claim 4, **characterised in that** the detection of the actual position points (15) is carried out by means of a differential GNSS system.

6. A method according to one of the claims 1 to 5, **characterised in that** the actual geometry (I) of the track (5) is detected by means of an inertial measuring unit (9) and that a time stamp is preset as a common time base for each measuring date, particularly by means of the inertial measuring unit (9).

7. A method according to claim 6, **characterised in that** a three-dimensional trajectory (10) is determined from measuring data of the inertial measuring unit (9) in an evaluation device (40), and that correction values are determined from a comparison with the target geometry (S) to correct the geometry of the track (5).

8. A method according to claim 6, **characterised in that** unfiltered measuring data of the detected track section (26) are output by the inertial measuring unit (9) to an evaluation device (40), and that a virtual inertial measurement of the same track section (26) is simulated with the target geometry (S) by means of a simulation device in order to obtain simulated measuring data assuming the target geometry (S), and that correction values for correcting the geometry of the track (5) are determined by subtracting the simulated measuring data from the unfiltered measuring data of the inertial measuring unit (9).

9. A method according to one of the claims 1 to 8, **characterised in that** at least one detected actual position point (15) which does not lie between a starting point (28) and an end point (29) of a worksite section (27) intended for position correction is determined as a point of restraint (24) for the compensation calculation (35).

10. A system to implement a method according to one of the claims 1 to 9, with a track inspection vehicle (1) for travelling on a track section (26), comprising a measuring system (8) for detecting an actual geometry (I) of the track (5), and with a computing unit (36) for calculating a target geometry (S) on the basis of the actual geometry (I), **characterised in that** the track inspection vehicle (1) comprises a position detection system (12) for detecting actual position points (15) along the track section (26), and that a presetting device (23) is set up for the computing unit (36), for determining at least one actual position point (15) as a point of restraint (24), and that an algorithm is set up in the computing unit (36) which adapts the target geometry (S) to the actual geometry (I) as a sequence of geometric track alignment design elements (31, 32, 33) and places it through the at least one point of restraint (24).

11. A system according to claim 10, **characterised in that** the track inspection vehicle (1) comprises a sensor device (17) for the automated detection of a track point (18, 19) fixed in its position, and that the sensor device (17) is coupled to the presetting device (23) in order to define an actual position point (15) associated to the track point (18, 19) as a point of restraint (24).

12. A system according to claim 10 or 11, **characterised in that** the presetting device (23) comprises an operating unit (25) by means of which an actual position point (15) can be determined as a point of restraint (24) by an operator.

13. A system according to one of the claims 10 to 12, **characterised in that** the position detection system (12) comprises a GNSS receiving device, which is, in particular, coupled to position measuring devices (7) for determining the position of the GNSS receiving device in relation to the track (5).

14. A system according to one of the claims 10 to 13, **characterised in that** the measuring system (8) comprises an inertial measuring unit (9) and, in particular, position measuring devices (7) for determining the position of the inertial measuring unit (9) in relation to the track (5).

15. A system according to one of the claims 10 to 14, **characterised in that** an evaluation device (40) is adapted to calculate correction values for correcting the geometry of the track (5), and that a control device of a track maintenance machine is adapted to process the correction values in order to place the track into the preset target geometry by means of a controlled lifting and lining unit.

## Revendications

1. Procédé de détermination d'une géométrie de consigne (S) d'une voie ferrée (5) pour une correction d'assiette de la voie ferrée (5), dans lequel une géométrie réelle (I) de la voie ferrée (5) est d'abord détectée sur une section de voie (26) au moyen d'un système de mesure (8) et dans lequel un calcul de la géométrie de consigne (S) est ensuite réalisé sur la base de la géométrie réelle (I) au moyen d'une unité de traitement (36), **caractérisé en ce que** des points de position réels (15) de la voie ferrée (5) sont détectés le long de la section de voie (26) au moyen d'un système de détection de position (13), qu'au moins un point de position réel (15) est préréglé en tant que point obligé (24) vers l'unité de traitement (36) et que la géométrie de consigne (S) est calculée au moyen de l'unité de traitement (36) de telle sorte que la géométrie de consigne (S) est ajustée à la géométrie réelle (1) en tant que succession d'éléments de tracé géométriques (31, 32, 33) et définie par le point obligé préréglé (24).

2. Procédé selon la revendication 1, **caractérisé en ce qu'**un point de voie fixé dans sa position (18, 19) est reconnu de manière automatisée au moyen d'un dispositif de capteur (17) et que le point de position réel (15) associé à un point de voie fixé reconnu (18, 19) est préréglé en tant que point obligé (24) au moyen d'un dispositif de préréglage (23).

3. Procédé selon la revendication 1 ou 2, **caractérisé en ce qu'**un point de position réel (15) est préréglé en tant que point obligé (24) par un opérateur au moyen d'un dispositif de préréglage (23).

4. Procédé selon une des revendications 1 à 3, **caractérisé en ce que** les points de position réels (15) sont détectés en tant que coordonnées GNSS au moyen d'un dispositif de réception GNSS.

5. Procédé selon la revendication 4, **caractérisé en ce que** la détection des points de position réels (15) est réalisée au moyen d'un système GNSS différentiel.

6. Procédé selon une des revendications 1 à 5, **caractérisé en ce que** la géométrie réelle (I) de la voie ferrée (5) est détectée au moyen d'une unité de mesure inertielle (9) et qu'une estampille temporelle est préréglée en tant que base temporelle commune pour chaque date de mesure notamment au moyen de l'unité de mesure inertielle (9).

7. Procédé selon la revendication 6, **caractérisé en ce qu'**une trajectoire tridimensionnelle (10) est déterminée à partir de données de mesure de l'unité de mesure inertielle (9) dans un dispositif d'évaluation (40) et que des valeurs de correction sont déterminées pour la correction d'assiette de la voie ferrée (5) à partir d'un ajustement avec la géométrie de consigne (S).

8. Procédé selon la revendication 6, **caractérisé en ce que** des données de mesure non filtrées de la section de voie détectée (26) sont émises par l'unité de mesure inertielle (9) vers un dispositif d'évaluation (40), qu'une mesure inertielle virtuelle de la même section de voie (26) est simulée avec la géométrie de consigne (S) au moyen d'un dispositif de simulation pour obtenir des données de mesure simulées avec l'hypothèse de la géométrie de consigne (S), et que des valeurs de correction sont déterminées pour la correction d'assiette de la voie ferrée (5) **en ce que** les données de mesure simulées sont soustraites des données de mesure non filtrées de l'unité de mesure inertielle (9).

9. Procédé selon une des revendications 1 à 8, **caractérisé en ce qu'**au moins un point de position réel détecté (15) qui ne se situe pas entre un point de départ (28) et un point final (29) d'une section de chantier (27) prévue pour la correction d'assiette est fixé en tant que point obligé (14) pour le calcul de compensation (35).

10. Système de réalisation d'un procédé selon une des revendications 1 à 9, avec un véhicule de mesure (1) pour le parcours d'une section de voie (26), comprenant un système de mesure (8) pour la détection d'une géométrie réelle (I) de la voie ferrée (5), et avec une unité de traitement (36) pour le calcul d'une géométrie de consigne (S) sur la base de la géométrie réelle (1), **caractérisé en ce que** le véhicule de mesure (1) comprend un système de détection de position (12) pour la détection de points de position réels (15) le long de la section de voie (26), qu'un dispositif de préréglage (23) pour l'unité de traitement (36) est configuré pour le préréglage d'au moins un point de position réel (15) en tant que point obligé (24) et qu'un algorithme qui ajuste la géométrie de consigne (S) à la géométrie réelle (1) en tant que succession d'éléments de tracé géométriques (31, 32, 33) et la définit par l'au moins un point obligé (24) est configuré dans l'unité de traitement (36).

11. Système selon la revendication 10, **caractérisé en ce que** le véhicule de mesure (1) comprend un dispositif de capteur (17) pour la reconnaissance automatisée d'un point de voie fixé dans sa position (18, 19) et que le dispositif de capteur (17) est couplé au dispositif de préréglage (23) pour fixer un point de position réel (15) associé au point de voie (18, 19) en tant que point obligé (24).

12. Système selon la revendication 10 ou 11, **caractérisé en ce que** le dispositif de préréglage (23) comprend une unité de commande (25) au moyen de laquelle un point de position réel (15) peut être fixé en tant que point obligé (24) par un opérateur.

13. Système selon une des revendications 10 à 12, **caractérisé en ce que** le système de détection de position (12) comprend un dispositif de réception GNSS qui est notamment couplé à des dispositifs de mesure de position (7) pour la détermination de la position du dispositif de réception GNSS par rapport à la voie ferrée (5).

14. Système selon une des revendications 10 à 13, **caractérisé en ce que** le système de mesure (8) comprend une unité de mesure inertielle (9) et notamment des dispositifs de mesure de position (7) pour la détermination de la position de l'unité de mesure inertielle (9) par rapport à la voie ferrée (5).

15. Système selon une des revendications 10 à 14, **caractérisé en ce qu'**un dispositif d'évaluation (40) est configuré pour le calcul de valeurs de correction en vue de la correction d'assiette de la voie ferrée (5) et qu'un dispositif de commande d'une machine de pose de voie est configuré pour le traitement des valeurs de correction pour amener la voie ferrée dans la géométrie de consigne préréglée au moyen d'un module de levage/alignement commandé.
